## Europäisches Patentamt
## European Patent Office
## Office européen des brevets

(19)

(11) Veröffentlichungsnummer: **0 080 200**
**B1**

(12)

# EUROPÄISCHE PATENTSCHRIFT

(45) Veröffentlichungstag der Patentschrift:
27.04.88

(21) Anmeldenummer: 82110774.5

(22) Anmeldetag: 22.11.82

(51) Int. Cl.⁴: **B 41 J 3/00**

(54) Verfahren und Anordnung zum Darstellen von Zeichen in Proportionalschrift.

(30) Priorität: 25.11.81 DE 3146756

(43) Veröffentlichungstag der Anmeldung:
01.06.83 Patentblatt 83/22

(45) Bekanntmachung des Hinweises auf die Patenterteilung:
27.04.88 Patentblatt 88/17

(84) Benannte Vertragsstaaten:
CH FR GB IT LI SE

(56) Entgegenhaltungen:
EP-A-0 027 590
FR-A-2 369 094
FR-A-2 425 327
GB-A-2 016 189
GB-A-2 056 916

(73) Patentinhaber: Siemens Aktiengesellschaft Berlin
und München, Wittelsbacherplatz 2, D-8000
München 2 (DE)

(72) Erfinder: Günther, Gerd- Joachim, Ing. grad.,
Gailenreuther Strasse 19, D-8000 München 60 (DE)

## Beschreibung

Die Erfindung bezieht sich auf ein Verfahren und eine Anordnung zum Darstellen von Zeichen in Proportionalschrift entsprechend dem Oberbegriff des Patentanspruchs 1.

Bei Fernschreibmaschinen ist es allgemein bekannt, die auf einem Aufzeichnungsträger darzustellenden Zeichen in einem festen Raster an jeweils vorgegebenen Druckpositionen auszudrucken, die einen Normalabstand voneinander aufweisen.

Insbesondere bei einer Darstellung von arabischen Schriftzeichen mittels einer Fernschreibmaschine erhält man eine kalligraphische Verbesserung der Schrift, wenn dort eine Proportionalschrift benutzt wird, bei der den darzustellenden Zeichen unterschiedliche Abstände zugeordnet werden. Eine Proportionalschrift wurde bei Fernschreibmaschinen bisher nicht verwendet, da dort jede Zeile üblicherweise eine konstante Länge aufweist, und bei mehreren vorkommenden schmalen Zeichen das Zeilenende nicht erreicht wird, bzw. bei mehreren breiten Zeichen das Zeilenende überschritten wird. Dies ist insbesondere dann von Bedeutung, wenn eine für Proportionalschrift ausgelegte Fernschreibmaschine mit einer Fernschreibmaschine zusammenarbeitet, bei der die Zeichen in den Normalabständen dargestellt werden.

Aus der EP-A-027 590 ist eine Anordnung für Mosaikdruckwerke zum Aufzeichnen von Zeichen in Proportionalschrift bekannt, bei der der Zeichenabstand zwischen zwei Zeichen immer eine konstante definierte Breite aufweist, womit sich der Abstand zwischen den Mitten der Zeichen in Abhängigkeit von den darzustellenden Zeichen verändert.

Aus der GB-A-2 016 189 ist ebenfalls eine Anordnung zum Darstellen von Zeichen in Proportionalschrift bekannt. Bei dieser bekannten Anordnung wird bei dem Drucken eines Zeichens eine dem hinteren Teil der Zeichenbreite eines vorangegangenen Zeichens zugeordnete Strecke zu einer dem vorderen Teil der Zeichenbreite eines abzudruckenden Zeichens zugeordneten Strecke hinzuaddiert und ein Druckerwagen wird um eine Strecke verschoben, die gleich ist der Summe der beiden Strecken.

Der Erfindung liegt die Aufgabe zugrunde, ein Verfahren und eine Anordnung anzugeben, mit deren Hilfe es möglich ist, auch bei Fernschreibmaschinen die Porportionalschrift zu verwenden, ohne daß es zu Schwierigkeiten bei der Zusammenarbeit mit anderen Fernschreibmaschinen kommt.

Diese Aufgabe wird gemäß der Erfindung bei dem Verfahren der eingangs genannten Art durch die im Patentanspruch angegebenen Merkmale gelöst.

Das Verfahren gemäß der Erfindung hat den Vorteil, daß mit verhältnismäßig geringem Aufwand eine kalligraphische Verbesserung der Schrift erreicht wird. Dies trifft insbesondere bei Fernschreibmaschinen für arabische Schrift zu.

Zweckmäßigerweise wird der Ausgleichsvorschub nach jedem Wort durchgeführt, und da jedes Wort üblicherweise mit einem Zeichen "Zwischenraum" abgeschlossen wird, wird der Ausgleichsvorschub gleichzeitig mit dem dem Zeichen "Zwischenraum" zugeordneten Vorschub durchgeführt. Die Größe des Ausgleichsvorschubes kann entweder aus der Summe von Korrekturschritten ermittelt werden, wobei die Korrekturschritte aus der Differenz zwischen jeweils einem dem Normalabstand der Zeichen entsprechenden Grundwert und der Summe aus dem Vorlauf und dem Korrekturwert des jeweiligen Zeichens gebildet wird, oder aus der Differenz zwischen der Summe der dem Normalabstand entsprechenden Grundwerte und der Summe der Vorschübe für jedes Zeichen ermittelt werden. Es ist auch möglich, den Ausgleichsvorschub aus der Summe der Differenzen zwischen den dem Normalabstand zugeordneten Grundwerten und den Vorschüben für jedes Zeichen zu ermitteln.

Die Vorläufe, die Korrekturwerte, ggfs. die Grundwerte und die Korrekturschritte werden zweckmäßigerweise in einem Speicher gespeichert und bei der Eingabe der entsprechenden Zeichen aufgerufen. Unter Verwendung von Rechenwerken wird dann der Ausgleichsvorschub berechnet und zweckmäßigerweise gleichzeitig mit dem dem Zeichen "Zwischenraum" zugeordneten Vorschub ausgeführt. Die Rechenwerke werden vorteilhafterweise durch einen Mikroprozessor realisiert.

Im folgenden werden das erfindungsgemäße Verfahren und eine Anordnung zur Durchführung des Verfahrens anhand von Zeichnungen näher erläutert. Es zeigen

Fig. 1 eine Darstellung von einzelnen Schriftzeichen entsprechend einer Proportionalschrift,

Fig. 2 ein den Schriftzeichen zugeordneter Speicherinhalt,

Fig. 3 eine vorgegebene Folge von Schriftzeichen bei einer Darstellung in Normalabständen und in Proportionalschrift,

Fig. 4 für die Ermittlung der Vorschübe und des Ausgleichsvorschubs erforderlichen Speicherinhalte und

Fig. 5 eine Anordnung zur Durchführung des Verfahrens.

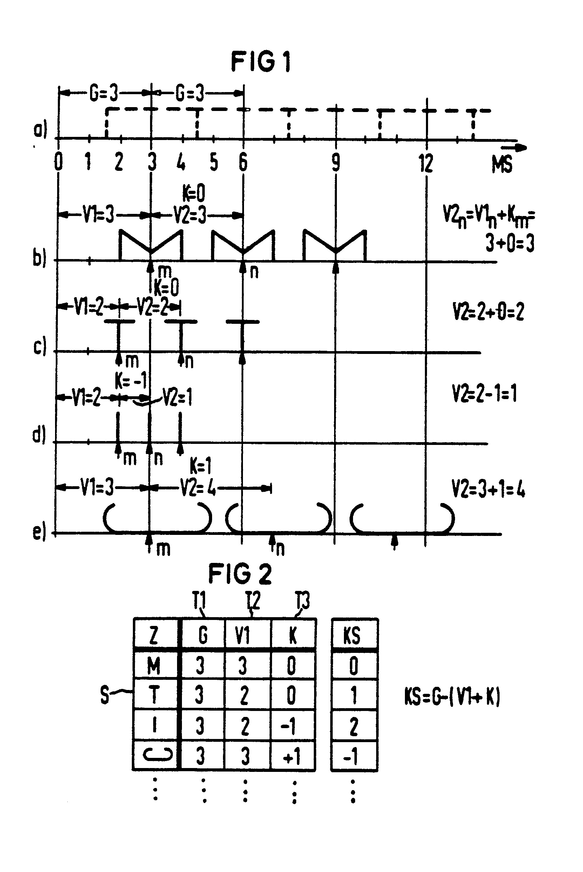

Bei der Darstellung in Fig. 1 sind in Zeile a die normalen Druckflächen von Zeichen dargestellt, die von einer üblichen Fernschreibmaschine abgedruckt werden. Der Abstand zwischen den Mitten dieser Druckflächen beträgt beispielsweise jeweils drei Motorschritte MS eines Wagens, auf dem ein Druckwerk angeordnet ist und der sich längs einer Schreibwalze bewegt, um die ein Aufzeichnungsträger gelegt ist. Vor dem Abdruck eines Zeichens wird normalerweise ein Grundvorschub G von drei Motorschritten MS zurückgelegt. Es sind auch Zeichen denkbar, beispielsweise das Zeichen "Accent", bei dem der Wagen nicht bewegt wird, und das somit einen Grundvorschub G von Null Motorschritten MS aufweist. Die Bereiche, die die Zeichen einnehmen können, sind gestrichelt dargestellt.

Bei einer Darstellung von Zeichen in Proportionalschrift wird vor dem Abdruck eines Zeichens kein konstanter Grundvorschub G ausgeführt, sondern es wird jeweils ein dem Zeichen zugeordneter vorangehender Vorschub, der im folgenden als Vorlauf V1 bezeichnet wird, durchgeführt. Für jedes Zeichen wird dieser Vorlauf V1 in einem Speicher gespeichert. Außerdem wird für jedes Zeichen ein Korrekturwert K gespeichert, der angibt, wie der Vorlauf V1 des folgenden Zeichens verändert werden soll.

Wie in Fig. 1 in Zeile b dargestellt ist, wird vor dem Abdruck jedes Zeichens "M" ein Vorschub von drei Motorschritten MS durchgeführt. Der Vorschub V2 vor dem Abdruck des n-ten Zeichens ergibt sich aus dem für das Zeichen "M" gespeicherten Vorlauf V1 von drei Motorschritten MS und dem Korrekturwert K, der den Wert Null aufweist. Der Vorschub V2n läßt sich somit aus der Gleichung

$$V2n = V1n + Km$$

ermitteln. Ausgehend von der Grundstellung wird immer ein Korrekturwert K mit dem Wert Null angenommen, so daß beim Abdruck des ersten Zeichens einer Zeile der Vorschub V2 mit dem Vorlauf V1 übereinstimmt.

Da im Fall des Zeichens "M" der Vorlauf V1 gleich dem Grundvorschub G ist, und kein Korrekturwert K vorhanden ist, weisen die Zeichen "M" einen Normalabstand entsprechend Zeile a auf.

Bei der Darstellung in Zeile c ist angenommen, daß das Zeichen "T" einen Vorlauf V1 von zwei Motorschritten MS und ebenfalls einen Korrekturwert K von Null aufweist. Der Vorschub V2 vor dem Abdruck des n-ten Zeichens beträgt somit jeweils zwei Motorschritte MS.

Bei der Darstellung in Zeile d wird angenommen, daß das Zeichen "I" einen Vorlauf V1 von zwei Motorschritten MS und einen Korrekturwert K von -1 aufweist. Der Vorschub V2 vor dem Abdruck des n-ten Zeichens "I" weist somit nur einen Motorschritt MS auf.

Bei der Darstellung in Zeile e wird angenommen, daß das darzustellende Zeichen einen Vorlauf V1 von drei Motorschritten MS und einen Korrekturwert K von +1 aufweist. In diesem Fall wird vor dem Abdruck des n-ten Zeichens ein Vorschub V2 von vier Motorschritten MS ausgeführt.

In Fig. 2 sind die den in Fig. 1 dargestellten Zeichen zugeordneten Grundvorschübe G, Vorläufe V1, Korrekturwerte K und Korrekturschritte KS dargestellt, die jeweils die Abweichung der von einem betrachten Zeichen eingenommenen Druckfläche von der normalen Druckfläche entsprechend Zeile a in Fig.1 angeben. Die Werte V1 und K sind in Tabellen T2 und T3 in einem Festwertspeicher gespeichert. Zusätzlich können in einer Tabelle T1 die Grundvorschübe G und/oder die Korrekturschritte KS gespeichert sein. Die Korrekturschritté KS können jedoch auch auf einfache Weise entsprechend der Gleichung

$$KS = G-(V1 + K)$$

unter Verwendung eines Rechenwerkes, vorzugsweise eines Mikroprozessors ermittelt werden.

Die Ermittlung der Korrekturschritte KS ist erforderlich, da bei Fernschreibmaschinen jeweils nur eine vorgegebene Anzahl von Zeichen mit Grundvorschüben G zugelassen ist. Beispielsweise können in einer Zeile nur 69 Zeichen abgedruckt werden. Wenn nun die Zeichen nicht im Normalabstand, sondern mit Proportionalschrift dargestellt werden, besteht die Möglichkeit, daß beim Auftreten von vielen verhältnismäßig kurzen Zeichen wesentlich mehr Zeichen in einer Zeile dargestellt werden können. In entsprechender Weise können beim Auftreten von vielen verhältnismäßig breiten Zeichen weniger Zeichen in einer Zeile dargestellt werden. Da sichergestellt sein muß, daß ein Austausch der Zeichen mit Fernschreibmaschinen erfolgen kann, die die Zeichen im Normalabstand abdrucken, muß innerhalb der Zeile jeweils eine Anpassung an den Normalabstand erfolgen. Diese Anpassung erfolgt nach jeweils einer Gruppe von Zeichen, beispielsweise einem Wort, das durch das Zeichen "Zwischenraum, ZWR" erkannt wird. Zur Erzeugung eines Ausgleichsvorschubes am Ende eines Wortes sind die Korrekturschritte KS erforderlich.

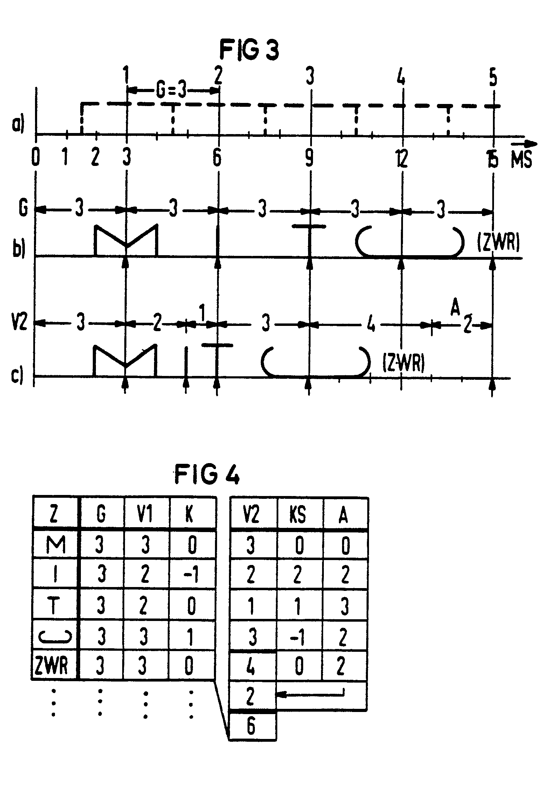

Bei der Darstellung in Fig. 3 sind in der Zeile a wieder die Druckpositionen beim Drucken von Zeichen mit dem Normalabstand dargestellt, In Zeile b ist eine Folge von Zeichen dargestellt, bei der die Zeichen jeweils entsprechend der Zeile a einen Normalabstand aufweisen und vor dem Abdruck jedes Zeichens ein Grundvorschub G von drei Motorschritten MS durchgeführt wird.

In Zeile c ist die gleiche Folge von Zeichen, die auch in Zeile b dargestellt ist, durch eine Proportionalschrift dargestellt. Vor dem Abdruck jedes Zeichens werden in diesem Fall jeweils unterschiedliche Vorschübe ausgeführt, und nachdem Auftreten des Zeichens "ZWR" wird ein Ausgleichsvorschub A ausgeführt, dessen Wert so bemessen ist, daß anschließend das Druckwerk an der Stelle positioniert ist, die der zugeordneten Stelle in der Zeile b entspricht.

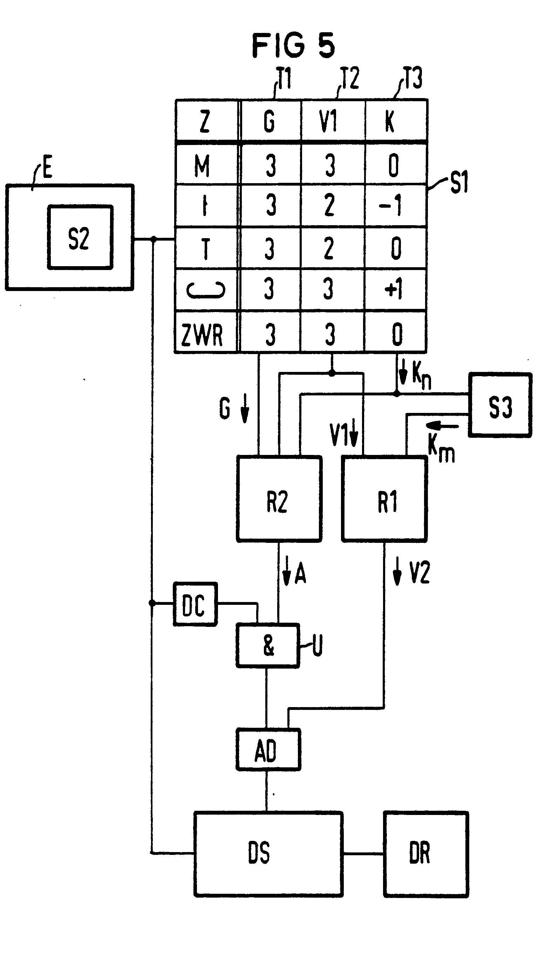

Weitere Einzelheiten der Fig. 3 werden im folgenden zusammen mit den in Fig. 4 dargestellten Speicherinhalten und Wertetabellen und mit dem in Fig. 5 dargestellten Blockschaltbild beschrieben.

Die in Fig. 4 dargestellten Speicherinhalte entsprechen im wesentlichen den in Fig. 2 dargestellten Speicherinhalten, wobei zusätzlich noch die Werte für das Zeichen "ZWR" angegeben sind. Die für die Ermittlung des Ausgleichsvorschubs A erforderlichen Werte V2 und KS, die sich aus den angegebenen Gleichungen errechnen lassen, sind ebenfalls dargestellt. Es wird davon ausgegangen, daß beim Abdruck des ersten Zeichens von einer Grundstellung ausgegangen wird, und der vorhergehende Korrekturwert K gleich Null ist. Der Wert des Ausgleichsvorschubs A entspricht jeweils der Summe der vorhergehenden Korrekturschritte KS. Bei dem Auftreten des Zeichens "ZWR" wird der letzte Wert des Ausgleichsvorschubes A zum entsprechenden Vorschub V2 hinzuaddiert und der Druckerwagen führt den entsprechenden Gesamtvorschub, im vorliegenden Fall von sechs Motorschritten aus.

Bei dem Blockschaltbild in Fig. 5 ist ein Speicher S1 dargestellt, der die drei Tabellen T1 bis T3 enthält, in denen die Grundwerte G, die Vorläufe V1 und die Korrekturwerte K für jedes Zeichen gespeichert sind. An dem Speicher S1 ist eingangsseitig eine Eingabeeinheit E, beispielsweise eine Tastatur angeschlossen, die einen Tastaturspeicher S2 aufweisen kann. Ausgangsseitig sind an dem Speicher S1 ein Zwischenspeicher S3 und zwei Rechenwerke R1 und 22 angeschlossen, die zweckmäßigerweise durch einen Mikroprozessor realisiert sind. Die Rechenwerke R1 und R2 ermitteln die Vorschübe V2, die Korrekturschritte KS und die Ausgleichsvorschübe A und geben diese an eine Druckersteuerung DS ab, die in bekannter Weise ausgebildet ist und Steuersignale an ein Druckwerk DR abgibt. Die Druckersteuerung DS ist außerdem mit der Eingabeeinheit E verbunden. Falls als Druckwerk DR ein Typenraddrucker vorgesehen ist, erzeugt die Druckersteuerung Signale für die Positionierung des Typenrades und ggfs. für die Abdruckstärke.

Wenn an der Tastatur die Taste für das Zeichen "M" betätigt wird, gelangt ein entsprechendes Codewort über den Speicher S2 zum Speicher S1 und zur Druckersteuerung DS. Die Druckersteuerung DS gibt an das Druckwerk DR Signale ab, mit denen das Typenrad entsprechend positioniert wird. Aus dem Speicher S1 werden der Vorlauf V1 und der Korrekturwert K ausgelesen und im Speicher S3 zwischengespeichert. Wenn von der Grundstellung des Druckwerks ausgegangen wird, hat der vorhergehende Korrekturwert K den Wert Null. Das Rechenwerk R1 ermittelt aus dem Vorlauf V1 und dem vorhergehenden Korrekturwert K den Vorschub V2 und gibt ihn über einen Addierer AD an die Druckersteuerung DS ab. Die Druckersteuerung erzeugt entsprechend dem Vorschub V2 drei Motorschritte MS und gibt sie an den Wagen ab. Anschließend erfolgt der Abdruck des Zeichens. Gleichzeitig mit der Ermittlung des Vorschubs V2 berechnet das Rechenwerk R2 aus dem Grundwert G, dem Vorlauf V1 und dem Korrekturwert K den Korrekturschritt KS und speichert diesen in einem Akkumulator. Wenn die Taste für das Zeichen "I" betätigt wird, werden wieder die entsprechenden Werte aus dem Speicher S1 ausgelesen. Das Rechenwerk R1 ermittelt einen Vorschub von zwei Motorschritten MS und das Rechenwerk R2 ermittelt einen Korrekturschritt KS von ebenfalls zwei Motorschritten MS und addiert diese im Akkumulator auf. Entsprechendes wiederholt sich beim Betätigen der den beiden folgenden Zeichen zugeordneten Tasten. Beim letzten Zeichen ist ein Korrekturschritt KS von -1 vorhanden, so daß sich der Wert des Ausgleichsvorschubs A im Akkumulator des Rechenwerks R2 nach einer Erhöhung auf den Wert 3 nach dem Zeichen "T" wieder auf den Wert 2 vermindert.

Wenn nach diesen vier Zeichen das Wort durch eine Eingabe des Zeichens "ZWR" beendet wird, wird auch für dieses Zeichen der Vorschub V2 berechnet. Da das Zeichen drei Motorschritte MS breit ist, hat der Korrekturschritt KS den Wert Null und der Ausgleichsvorschub A behält seinen Wert 2. Ein Decodierer DC erkennt das Auftreten des Zeichens "ZWR" und schaltet über ein UND-Glied U den Ausgleichsvorschub A zum Addierer AD durch. Dieser addiert den Ausgleichsvorschub A mit dem Wert 2 zu dem berechneten Vorschub V2 mit dem Wert 4, so daß sich als Gesamtvorschub sechs Motorschritte MS ergeben. Die Druckersteuerung DS gibt somit nach dem Ende des Wortes sechs Steuersignale an einen Schrittmotor ab, der den Druckerwagen entsprechend Fig. 3 in die fünfte Druckposition positioniert, die 15 Motorschritten entspricht. Das Druckwerk weist dann die gleiche Stellung auf, wie bei dem Abdruck der Zeichen entsprechend den Normalabständen.

Der Ausgleichsvorschub erfolgt innerhalb des Textes immer mit dem Zeichen "ZWR". Wenn mehrere, verhältnismäßig breite Zeichen innerhalb des Wortes vorkommen, ist dieser Ausgleich jedoch nicht immer möglich, so daß nur diejenigen

Zeichen mit einer verhältnismäßig großen Breite dargestellt werden, bei denen sichergastellt ist, daß sie innerhalb eines Wortes nur einmal vorkommen.

**Patentansprüche**

1. Verfahren zum Darstellen von Zeichen in Proportionalschrift, bei dem die Zeichen in Zeilen auf einem Aufzeichnungsträger dargestellt werden, bei dem in jeder Zeile eine vorgegebene Anzahl von Zeichen nicht überschritten wird, und bei dem die vorgegebene Anzahl durch die Zeichenlänge und einen Normalabstand der Zeichen gegeben ist, gekennzeichnet durch folgende Verfahrensschritte:

a) in einem Speicher (S1) werden für die Zeichen einerseits Vorläufe (V1) und andererseits Korrekturwerte (K) gespeichert, die festlegen, um welchen Wert der Vorlauf (V1) des jeweils folgenden Zeichens verändert wird.

b) Vor dem Abdruck jedes Zeichens wird aus dem jeweiligen Vorlauf (V1) dieses Zeichens und dem Korrekturwert (K) des vorangegangen Zeichens jeweils ein Vorschub (V2) ermittelt.

c) Nach der Ausführung des Vorschubs (V2) wird das entsprechende Zeichen abgedruckt.

d) Nach jeweils einer Gruppe von Zeichen wird ein Ausgleichsvorschub (A) ausgeführt, der der Differenz der Summe der Normalabstände (G) der Zeichen der Gruppe und der Summe der Vorschübe (V2) der Zeichen entspricht.

2. Verfahren nach Anspruch 1, <u>dadurch gekennzeichnet</u>, daß als Gruppes von Zeichen jeweils ein Wort vorgesehen ist, das durch ein Zeichen "Zwischenraum" abgeschlossen wird, und daß der Ausgleichsvorschub (A) mit dem dem Zeichen "Zwischenraum" zugeordneten Vorschub gemeinsam ausgeführt wird.

3. Verfahren nach Anspruch 1 oder Anspruch 2, <u>dadurch gekennzeichnet</u>, daß der Ausgleichsvorschub (A) aus der Summe von Korrekturschritten (KS) ermittelt wird, wobei die Korrekturschritte (KS) aus der Differenz zwischen dem Normalabstand (G) und der Summe aus dem Vorlauf (V1) und dem Korrekturwert (K) des jeweiligen Zeichens gebildet wird.

4. Verfahren nach Anspruch 1 oder Anspruch 2, <u>dadurch gekennzeichnet</u>, daß der Ausgleichsvorschub (A) aus der Differenz zwischen der Summe der Normalabstände (G) und der Summe der Vorschübe (V2) für jedes Zeichen ermittelt wird.

5. Verfahren nach Anspruch 1 oder Anspruch 2, <u>dadurch gekennzeichnet</u>, daß der Ausgleichsvorschub (A) aus der Summe der Differenzen zwischen dem Normalabstand (G) und den Vorschüben (V2) für jedes Zeichen ermittelt wird.

6. Anordnung zur Durchführung des Verfahrens nach Anspruch 1, <u>gekennzeichnet durch</u> einen mit einer Eingabeeinheit (E) verbundenen Speicher (S1), in dem die den Zeichen zugeordneten Vorläufe (V1) und die Korrekturwerte (K) gespeichert sind, durch ein dem Speicher (S1) nachgeschaltetes erstes Rechenwerk (R1), das für jedes darzustellenden Zeichen den Vorschub (V2) ermittelt, und durch ein mit dem Speicher (S1) verbundenes zweites Rechenwerk (R2), das den Ausgleichsvorschub (A) berechnet.

7. Anordnung nach Anspruch 6, <u>dadurch gekennzeichnet</u>, daß die Rechenwerke (R1, R2) mit einer Addierstufe (AD) verbunden sind, die nach dem Ende der Gruppe von Zeichen den Ausgleichsvorschub (A) zum letzten berechneten Vorschub (V2) hinzuaddiert und an eine Drucksteuerung (DS) abgibt.

8. Anordnung nach Anspruch 7, <u>dadurch gekennzeichnet</u>, daß ein Decodierer (DC) vorgesehen ist, der das Auftreten eines Zeichens "Zwischenraum" erkennt und über ein UND-Glied (U) den Ausgleichsvorschub (A) zur Addierstufe (AD) durchschaltet.

9. Anordnung nach einem der Ansprüche 6 bis 8, <u>dadurch gekennzeichnet</u>, daß im Verbindungsweg zwischen dem Speicher (S1) und dem ersten Rechenwerk (R1) ein Zwischenspeicher (S3) vorgesehen ist, der den Korrekturwert (K) des jeweils vorangegangenen Zeichens speichert.

10. Anordnung nach einem der Ansprüche 6 bis 9, <u>dadurch gekennzeichnet</u>, daß die Speicher (S1 bis S3), die Rechenwerke (R1, R2), die Addierstufe (AD) und/oder der Decodierer (DC) aus einem Mikroprozessor gebildet werden.

**Claims**

1. A method of displaying characters in proportional script, in which the characters are displayed in lines on a data carrier, in which a predetermined number of characters is not exceeded in each line, and in which the predetermined number is governed by the character length and a normal spacing of the characters, <u>characterised by</u> the following steps:

a) for the characters, a store (S1) stores on the one hand preliminary feed functions (V1) and on the other hand correction values (K) which determine the amount by which the preliminary feed function (V1) of the respective following character is changed,

b) before each character is printed, a feed function (V2) is calculated from the respective preliminary feed function (V1) of this character and the correction value (K) of the preceding character,

c) following the execution of the feed function (V2) the corresponding character is printed,

d) following each group of characters, a compensating feed function (A) is executed which corresponds to the difference between the sum of the normal spacings (G) of the characters in the group and the sum of the feed functions (V2) of the characters.

2. A method as claimed in claim 1, <u>characterised in</u> that a word terminated by an "interspace" is in each case provided as group of characters, and that the compensating feed function (A) is executed in common with the feed function assigned to the "interspace" character.

3. A method as claimed in claim 1 or 2, <u>characterised in</u> that the compensating feed function (A) is calculated from the sum of correction steps (KS), where the correction steps (KS) are formed from the difference between the normal spacing (G) and the sum of the preliminary feed function (V1) and the correction value (K) of the respective character.

4. A method as claimed in claim 1 or 2, <u>characterised in</u> that the compensating feed function (A) is calculated from the difference between the sum of the normal spacings (G) and the sum of the feed functions (V2) for each character.

5. A method as claimed in claim 1 or 2, <u>characterised in</u> that the compensating feed function (A) is calculated from the sum of the differences between the normal spacing (G) and the feed functions (V2) for each character,

6. An arrangement for implementing the method claimed in claim 1, <u>characterised by</u> a store (S1) which is connected to en input unit (E) and which stores the preliminary feed functions (V1), assigned to the characters, and the correction values (K), further characterised by a first computing unit (R1) which is connected to the output of the store (S1) and which calculates the feed function (V2) for each character which is to be displayed, and further characterised by a second computing unit (R2) which is connected to the store (S1) and which calculates the compensating feed function (A).

7. An arrangement as claimed in claim 6, <u>characterised in</u> that the computing units (R1, R2) are connected to an adder stage (AD) which, following the end of the group of characters, adds the compensating feed function (A) to the last calculated feed function (V2) and emits this to a printer control unit (DS).

8. An arrangement as claimed in claim 7, <u>characterised in</u> that a decoder (DC) is provided which recognises the occurrence of an "interspace" character and, via an AND-gate (U), switches through the compensating feed function (A) to the adder stage (AD).

9. An arrangement as claimed in one of the claims 6 to 8, <u>characterised in</u> that the connection path between the store (S1) and the first computing unit (R1), includes an intermediate store (S3) which stores the correction value (K) of the respective preceding character.

10. An arrangement as claimed in one of the claims 6 to 9, <u>characterised in</u> that the stores (S1 to S3), the computing units (R1, R2), the adder stage (AD) and/or the decoder (DC) are formed by a microprocessor.

## Revendications

1. Procédé pour représenter des signes en écriture à espacement proportionnel, selon lequel les signes sont représentés sur des lignes sur un support d'enregistrement et selon lequel un nombre prédéterminé de signes n'est pas dépassé dans chaque ligne et selon lequel le nombre prédéterminé est fixé par la longueur des signes et un espacement normal entre les signes, caractérisé par les étapes opératoires suivantes:

a) d'une part des avances (V1) et d'autre part des valeurs de correction (K), qui déterminent de quelle valeur l'avance (V1) du signe respectivement suivant est modifiée, sont mémorisées pour les signes, dans une mémoire (S1);

b) avant l'imprèssion de chaque signe, une avance respective V2 est déterminée à partir de l'avance respective (V1) de ce signe et de la valeur de correction (K) du signe précédent;

c) après l'exécution de l'avance (V2), le signe correspondant est imprimé; et

d) après un groupe respectif de signes, une avance de compensation (A) est réalisée, qui correspond à la différence entre la somme des espacements normaux (C) des signes du groupe et la somme des avances (V2) des signes.

2. Procédé suivant la revendication 1, caractérisé par le fait qu'il est prévu, en tant que groupe de signes, respectivement un mot qui se termine par un signe "espace intercalaire", et que l'avance de compensation (a) est exécutée en commun avec l'avance associée au signe "espace intercalaire".

3. Procédé suivant la revendication 1 ou 2, caractérisé par le fait que l'avance de compensation (A) est déterminée à partir de la somme de pas de correction (KS), dont chacun est formé à partir de la différence entre l'espacement normal (G) et la somme de l'avance (V1) et de le valeur de correction (K) du signe respectif.

4. Procédé selon la revendication 1 ou 2, caractérisé en ce que l'avance de compensation (A) est déterminée à partir de la différence entre la somme des espacements normaux (G) et la somme des avances (V2) pour chaque signe.

5. Procédé suivant la revendication 1 ou 2, caractérisé par le fait que l'avance de compensation (a) est déterminée à partir de la somme des différences entre l'espaccment normal (G) et les avances (V2) pour chaque signe.

6. Dispositif pour la mise en oeuvre du procédé suivant la revendication 1, caractérisé par une mémoire (S1) qui est reliée à une unité d'entrée (E) et dans laquelle les avances (V1) associée aux signes et les valeurs de correction (K) sont mémorisées, par une première unité de calcul (R1), qui est branchée en aval de la mémoire (S1) et qui détermine l'avance (V2) pour chaque signe devant être représenté, et par une seconde unité de calcul (R2), qui est reliée à la mémoire (S1) et qui calcule l'avance de compensation (A).

7. Dispositif suivant la revendication 6, caractérisé par le fait que les unités de calcul (R1, R2) sont reliées à un étage additionneur (AD) qui, à la fin du groupe de signes, ajoute l'avance de compensation (A) à la dernière avance calculée (V2) et l'envoie à un dispositif (DS) de commande d'imprèssion.

8. Dispositif suivant la revendication 7, caractérisé par le fait qu'il est prévu un décodeur (DC), qui identifie l'apparition d'un signe "espace intercalaire" et transmet directement, par l'intermédiaire d'un circuit ET (U), l'avance de compensation (A) à l'étage additionneur (AD).

9. Dispositif suivant l'une des revendications 6 à 8, caractérisé par le fait qu'il est prévu, dans la voie de liaison entre la mémoire (S1) et la première unité de calcul (R1), une mémoire intermédiaire (S3) qui mémorise la valeur de correction (K) du signe précédent respectif.

10. Dispositif suivant l'une des revendications 6 à 9, caractérisé par le fait que les mémoires (S1 à S3), les unités de calcul (R1, R2), l'étage additionneur (AD) et/ou le décodeur (DC) sont formés par un microprocesseur.

## FIG 1

a)

G=3    G=3

0  1  2  3  4  5  6    9    12    MS

b)

$V1=3$    $V2=3$    K=0

$V2_n = V1_n + K_m =$
$3+0=3$

m    n

c)

$V1=2$  $V2=2$    K=0

$V2 = 2+0 = 2$

m    n

d)

$V1=2$  K=-1  $V2=1$

$V2 = 2-1 = 1$

m  n

e)

$V1=3$    $V2=4$    K=1

$V2 = 3+1 = 4$

m    n

## FIG 2

| Z | G | V1 | K |  | KS |
|---|---|----|----|---|----|
|   | T1 | T2 | T3 |  |    |
| M | 3 | 3 | 0 |  | 0 |
| T | 3 | 2 | 0 |  | 1 |
| I | 3 | 2 | -1 |  | 2 |
| C | 3 | 3 | +1 |  | -1 |
| ⋮ | ⋮ | ⋮ | ⋮ |  | ⋮ |

S

$KS = G - (V1 + K)$

# FIG 3

a)

G=3

MS

G

b) (ZWR)

V2

c) (ZWR)

A

# FIG 4

| Z | G | V1 | K | V2 | KS | A |
|---|---|----|---|----|----|---|
| M | 3 | 3 | 0 | 3 | 0 | 0 |
| l | 3 | 2 | -1 | 2 | 2 | 2 |
| T | 3 | 2 | 0 | 1 | 1 | 3 |
| ⌣ | 3 | 3 | 1 | 3 | -1 | 2 |
| ZWR | 3 | 3 | 0 | 4 | 0 | 2 |
| ⋮ | ⋮ | ⋮ | ⋮ | 2 | | |
| | | | | 6 | | |

# FIG 5

| Z | G | V1 | K |
|---|---|----|---|
| M | 3 | 3 | 0 |
| I | 3 | 2 | −1 |
| T | 3 | 2 | 0 |
| ⌣ | 3 | 3 | +1 |
| ZWR | 3 | 3 | 0 |